# EUROPEAN PATENT SPECIFICATION

(11) **EP 3 424 749 B1**
(45) Date of publication and mention of the grant of the patent: **09.08.2023**
(21) Application number: 18178977.7
(22) Date of filing: 21.06.2018
(51) Int. Cl.: B60C 1/00, C08L 9/06

(54) **PNEUMATIC TIRE**
LUFTREIFEN
PNEUMATIQUE

(30) Priority: 06.07.2017 JP 2017132801
(43) Date of publication of application: 09.01.2019
(73) Proprietor: Sumitomo Rubber Industries, Ltd., Kobe-shi, Hyogo 651-0072 (JP)
(72) Inventor: SUZUKI, Yumi, Kobe-shi, Hyogo 651-0072 (JP); MIYAZAKI, Tatsuya, Kobe-shi, Hyogo 651-0072 (JP)
(74) Representative: TBK

(56) References cited:
- EP-A1- 3 165 566
- JP-A- 2017 115 080

## Description

### BACKGROUND OF THE INVENTION

### Field of the Invention

The present invention relates to a pneumatic tire.

### Description of the Background Art

A rubber composition for a pneumatic tire tread is required to have dry grip performance, and the performance is imparted mainly by using styrene-butadiene rubber, an alkylphenol resin, a liquid styrene-butadiene copolymer, or the like.

Meanwhile, in each of these techniques, the glass transition temperature Tg of the rubber composition rises and thus the temperature dependency deteriorates, so that there is a problem that desired grip performance is achieved only in a high-temperature range. Thus, it is desired to impart desired grip performance in a wide temperature range.
Patent Document EP 3 165 566 A1 discloses a rubber composition for treads containing: a diene rubber including styrene-butadiene rubber; at least one softener selected from the group consisting of low temperature plasticizers, process oils, and resins having a softening point of 160°C or lower; zinc dithiophosphate; and sulfur, wherein, per 100 parts by mass of the diene rubber, there are 40 parts by mass or more of the softener, 0.2-15 parts by mass of the zinc dithiophosphate, and less than 2.5 parts by mass of zinc oxide.
Patent Document JP 2017 115080 A relates to a high performance tire having a tread in which the tread is produced using a rubber composition containing a rubber component containing: an epoxidized natural rubber; and a phenolic resin.

### SUMMARY OF THE INVENTION

The present invention has been made to solve the above-described problem, and an object of the present invention is to provide a pneumatic tire that achieves excellent dry grip performance in a wide temperature range.

The present invention is directed to a pneumatic tire including a tread for which a rubber composition as defined in any one of claims 1 to 5 is used.

According to the present invention, since the pneumatic tire includes a tread for which a rubber composition as defined in any one of claims 1 to 5 is used, excellent dry grip performance can be achieved in a wide temperature range.

### DESCRIPTION OF THE PREFERRED EMBODIMENTS

The pneumatic tire includes a tread for which a rubber composition containing: a rubber component containing styrene-butadiene rubber (SBR); an alkylphenol resin; and an aliphatic polybasic acid ester having a SP value of 8.40 to 9.50, 10 to 50 parts by mass of the rubber component, carbon black having a dibutylphthalate absorption amount (DBP) of not less than 50 ml/100 g and not greater than 200 ml/100 g, silica having a nitrogen specific surface area (N₂SA) of not less than 40 m²/g and not greater than 500 m²/g and a silane coupling agent is used. By blending both an alkylphenol resin and an aliphatic polybasic acid ester having a predetermined SP value into a composition containing SBR, excellent dry grip performance is achieved in a wide temperature range. In addition, favorable abrasion resistance can also be ensured. The reason why such advantageous effects are achieved is not necessarily clear but is inferred as described below.

By using an ester having a SP value close to that of the SBR as the aliphatic polybasic acid ester, compatibility with the SBR is enhanced, so that the temperature dependency of the rubber composition is improved. Thus, by combining the aliphatic polybasic acid ester and the alkylphenol resin, deterioration of the temperature dependency, due to the use of the alkylphenol resin, in which high grip performance is achieved only in a high-temperature range can be inhibited, and high dry grip performance is achieved over a wide temperature range. In addition, excellent abrasion resistance is also achieved. Moreover, since deterioration of the temperature dependency is inhibited, it is also possible to blend the alkylphenol resin in a larger amount than in the conventional art. In this case, very high dry grip performance can be achieved in a wide temperature range.

### (Rubber Composition for Tread)

Hereinafter, a rubber composition used for a tread will be described. The rubber composition contains a rubber component containing SBR. The SBR is not particularly limited, and, for example, emulsion-polymerized styrene-butadiene rubber (E-SBR), solution-polymerized styrene-butadiene rubber (S-SBR), and the like can be used. The SBR may be unmodified SBR or modified SBR. As commercially available products, for example, products manufactured by and available from Sumitomo Chemical Co., Ltd., JSR Corporation, Asahi Kasei Corporation, Zeon Corporation, etc., can be used.

From the standpoint of dry grip performance, the amount of the SBR in 100% by mass of the rubber component is preferably not less than 40% by mass and more preferably not less than 70% by mass. The upper limit of the amount is not particularly limited and the amount may be 100% by mass.

The styrene content of the SBR is preferably not less than 20% by mass and more preferably not less than 25% by mass. By setting the styrene content to be not less than the lower limit, sufficient grip performance tends to be achieved. The styrene content is preferably not greater than 50% by mass and more preferably not greater than 47% by mass. By setting the styrene content to be not greater than the upper limit, favorable abrasion resistance can be ensured, and the temperature dependency decreases and change in performance in response to temperature change can be inhibited. Thus, excellent dry grip performance tends to be achieved in a wide temperature range.

The styrene content is calculated by H¹-NMR measurement.

The vinyl content of the SBR (the vinyl content of the butadiene component of the SBR) is preferably not less than 20% by mass and more preferably not less than 35% by mass. By setting the vinyl content to be not less than the lower limit, favorable dry grip performance tends to be achieved. The vinyl content is preferably not greater than 60% by mass and more preferably not greater than 50% by mass. By setting the vinyl content to be not greater than the upper limit, excellent dry grip performance tends to be achieved in a wide temperature range.

The vinyl content (1,2-bond butadiene unit content) can be measured by infrared absorption spectrometry.

As described above, modified SBR can also be used in the present invention. The modified SBR only needs to be SBR having a functional group that interacts with a filler such as silica, and examples of such modified SBR include end-modified SBR obtained by modifying at least one end of SBR with a compound (modifier) having the above functional group (end-modified SBR having the above functional group at an end thereof), main chain-modified SBR having the above functional group in the main chain thereof, main chain/end-modified SBR having the above functional group in the main chain and at an end thereof (for example, main chain/end-modified SBR that has the above functional group in the main chain thereof and in which at least one end thereof is modified with the above modifier), and end-modified SBR that is modified (coupled) by using a multifunctional compound having two or more epoxy groups in the molecule thereof and to which a hydroxyl group or an epoxy group is introduced.

Examples of the above functional groups include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms) are preferable.

As the modified SBR, SBR modified with a compound (modifier) represented by the following formula is particularly suitable. 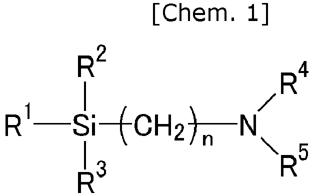 (wherein R¹, R², and R³ are the same or different from each other, and each represent an alkyl group, an alkoxy group, a silyloxy group, an acetal group, a carboxyl group (-COOH), a mercapto group (-SH), or a derivative thereof. R⁴ and R⁵ are the same or different from each other, and each represent a hydrogen atom or an alkyl group. R⁴ and R⁵ may be linked together to form a ring structure together with a nitrogen atom. n represents an integer.)

As the modified SBR modified with the compound (modifier) represented by the above formula, SBR obtained by modifying the polymerization terminals (active terminals) of solution-polymerized styrene butadiene rubber (S-SBR) with the compound represented by the above formula (modified SBR disclosed in Japanese Laid-Open Patent Publication No. 2010-111753, etc.) is suitably used.

As R¹, R², and R³, an alkoxy group is suitable (an alkoxy group having preferably 1 to 8 carbon atoms, more preferably 1 to 4 carbon atoms). As R⁴ and R⁵, an alkyl group (preferably, an alkyl group having 1 to 3 carbon atoms) is suitable. The integer n is preferably 1 to 5, more preferably 2 to 4, and further preferably 3. In addition, when R⁴ and R⁵ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable. These compounds may be used individually, or two or more of these compounds may be used in combination.

As the modified SBR, modified SBR modified with the following compound (modifier) can also be suitably used. Examples of the modifier include: polyglycidyl ethers of polyhydric alcohols such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

Amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane, and (3-glycidyloxypropyl)-pentamethyldisiloxane;

Sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted azilidine compounds such as ethyleneimine and propyleneimine; alkoxysilanes such as methyltriethoxysilane; (thio)benzophenone compounds having an amino group and/or a substituted amino group, such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Among them, modified SBR modified with alkoxysilanes is preferable.

Modification with the above compounds (modifiers) can be carried out by a known method.

Examples of usable rubber components other than the SBR include isoprene-based rubbers and diene-based rubbers, such as butadiene rubber (BR), acrylonitrile-butadiene rubber (NBR), chloroprene rubber (CR), isobutylene-isoprene-rubber (IIP), and styrene-isoprene-butadiene copolymer rubber (SIBR). These rubbers may be used individually, or two or more of these rubbers may be used in combination.

Examples of isoprene-based rubbers include natural rubber (NR), isoprene rubber (IR), reformed NR, modified NR, and modified IR. As NR, NRs that are generally used in the tire industry, such as SIR20, RSS#3, and TSR20 can be used. As IR, IRs that are generally used in the tire industry, such as IR2200, can be used. Examples of reformed NR include deproteinized natural rubber (DPNR) and ultra pure natural rubber (UPNR), examples of modified NR include epoxidized natural rubber (ENR), hydrogenated natural rubber (HNR), and grafted natural rubber, and examples of modified IR include epoxidized isoprene rubber, hydrogenated isoprene rubber, and grafted isoprene rubber. These rubbers may be used individually, or two or more of these rubbers may be used in combination.

The rubber composition does not particularly have to contain an isoprene-based rubber. In the case where the rubber component contains an isoprene-based rubber, the amount of the isoprene-based rubber in 100% by mass of the rubber component is preferably 1 to 30% by mass and more preferably 1 to 15% by mass.

The BR is not particularly limited, and any of unmodified BR and modified BR can be used. Examples of the BR include BRs that are generally used in the tire industry, such as BR having a high cis content, BR containing 1,2-syndiotactic polybutadiene crystal (SPB-containing BR), butadiene rubber synthesized by using a rare earth element catalyst (rare earth BR), and tin-modified butadiene rubber (tin-modified BR) modified with a tin compound. As for the BR, as commercially available products, products of Ube Industries, Ltd., JSR Corporation, Asahi Kasei Corporation, Zeon Corporation, etc., can be used. These BRs can be used individually, or two or more of these BRs may be used in combination.

The rubber composition does not particularly have to contain BR. In the case where the rubber component contains BR, the The amount of the BR in 100% by mass of the rubber component is preferably 1 to 30% by mass and more preferably 1 to 15% by mass.

The cis content of the BR is preferably not less than 95% by mass and more preferably not less than 97% by mass. The cis content can be measured by infrared absorption spectrometry.

The rubber composition contains both an alkylphenol resin and an aliphatic polybasic acid ester having a predetermined SP value. By using these components in combination, dry grip performance in a wide temperature range is significantly (synergistically) improved, and excellent abrasion resistance can also be ensured.

The amount of the alkylphenol resin per 100 parts by mass of the rubber component is preferably not less than 10 parts by mass and more preferably not less than 15 parts by mass. By setting the amount to be not less than the lower limit, favorable dry grip performance tends to be achieved. In addition, the amount is preferably not greater than 100 parts by mass, more preferably not greater than 90 parts by mass, further preferably not greater than 80 parts by mass, and particularly preferably not greater than 50 parts by mass. By setting the amount to be not greater than the upper limit, favorable abrasion resistance is ensured, and performance balance between the abrasion resistance and dry grip performance tends to be favorable.

The softening point of the alkylphenol resin is preferably 100 to 160°C. As the upper limit, the softening point is more preferably not higher than 150°C, and as the lower limit, the softening point is more preferably not lower than 130°C.

In the present specification, the softening point is a softening point that is measured with a ring and ball softening point measuring device according to JIS K 6220-1: 2001 and that is a temperature at which a ball has descended.

The alkylphenol resin is not particularly limited, and examples of the alkylphenol resin include alkylphenol-aldehyde condensation resins obtained by reacting alkylphenols with aldehydes such as formaldehyde, acetaldehyde, and furfural by an acid or an alkali catalyst; alkylphenol-alkyne condensation resins obtained by reacting alkylphenols with alkynes such as acetylene; and modified alkylphenol resins obtained by modifying these resins using compounds such as cashew oil, tall oil, linseed oil, various animal oils and plant oils, unsaturated fatty acids, rosin, alkylbenzene resins, aniline, and melamine. Among them, alkylphenol-alkyne condensation resins are preferable, and alkylphenol-acetylene condensation resins are particularly preferable.

Examples of the alkylphenol forming the alkylphenol resin include cresol, xylenol, ester, that is, the alkylphenol resin/the aliphatic polybasic acid ester (mass ratio), is preferably 20/80 to 90/10, more preferably 40/60 to 80/20, and further preferably 60/40 to 75/25.

The amount of the aliphatic polybasic acid ester per 100 parts by mass of the rubber component is preferably not less than 5 parts by mass and more preferably not less than 10 parts by mass. By setting the amount to be not less than the lower limit, favorable dry grip performance tends to be achieved. The amount is preferably not greater than 55 parts by mass, more preferably not greater than 40 parts by mass, and further preferably not greater than 30 parts by mass. By setting the amount to be not greater than the upper limit, favorable abrasion resistance is ensured, and performance balance between the abrasion resistance and dry grip performance tends to be favorable.

From the standpoint of dry grip performance in a wide temperature range, the SP value (8.40 to 9.50) of the aliphatic polybasic acid ester is preferably not less than 8.50 and more preferably not less than 8.60. In addition, from the same standpoint, the SP value is preferably not greater than 9.20, more preferably not greater than 9.00, and further preferably not greater than 8.80. By setting the SP value within the above range, desired compatibility with SBR or a later-described liquid styrene-butadiene copolymer is ensured, and favorable dry grip performance is achieved in a wide temperature range.

In the present specification, the SP value means a solubility parameter calculated by using Hansen's equation.

The freezing point of the aliphatic polybasic acid ester is preferably not lower than -70°C, more preferably not lower than -40°C, and further preferably not lower than -30°C. In addition, the freezing point is preferably not higher than -15°C. When the freezing point is within the above range, favorable dry grip performance is achieved in a wide temperature range.

In the present specification, the freezing point is a value measured by the following method.

A sample is put into an aluminum cell, and the aluminum cell is sealed and inserted into a sample holder of a differential scanning calorimeter (DSC-60A, manufactured by Shimadzu Corporation). Thereafter, while the sample holder is heated to 150°C at 10°C/min in a nitrogen atmosphere, an endothermic peak is observed. The obtained endothermic peak is regarded as a freezing point.

The flash point of the aliphatic polybasic acid ester is preferably not lower than 100°C, more preferably not lower than 150°C, and further preferably not lower than 200°C. By setting the flash point to be not lower than the lower limit, a decrease in amount from rubber kneading and during vulcanization is inhibited, and expected physical properties tend to be obtained. The upper limit is not particularly limited, but the flash point is normally not higher than 250°C.

In the present specification, the flash point is a value measured by the Cleveland open method conforming to JIS K 2265-4: 2007.

The weight average molecular weight (Mw) of the aliphatic polybasic acid ester is preferably not less than 150, more preferably not less than 250, and further preferably not less than 350. By setting the Mw to be not less than the lower limit, the aliphatic polybasic acid ester is inhibited from moving to an adjacent member or being volatilized, and the effect of the aliphatic polybasic acid ester tends to be able to be sufficiently exerted. The Mw is preferably not greater than 1000, more preferably not greater than 750, and further preferably not greater than 500. By setting the Mw to be not greater than the upper limit, an excellent plasticizing effect tends to be achieved.

In the present specification, the Mw can be obtained by standard polystyrene standard conversion based on a value measured by gel permeation chromatography (GPC) (GPC-8000 series manufactured by Tosoh Corporation, detector: differential refractometer, column: TSKGEL SUPERMALTPORE HZ-M manufactured by Tosoh Corporation).

Examples of the aliphatic polybasic acid ester include aliphatic dibasic acid esters and aliphatic tribasic acid esters. Among them, aliphatic dibasic acid esters such as adipates, azelates, sebacates, maleates, and fumarates are preferable.

As such an aliphatic dibasic acid ester, for example, a compound represented by the following formula (1) can be suitably used. 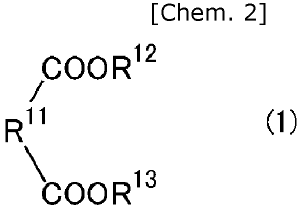 (wherein R¹¹ represents a bivalent saturated or unsaturated hydrocarbon group. R¹² and R¹³ are the same or different from each other, and each represent a branched or unbranched alkyl group or a group represented by -(R¹⁴-O)ₘ-R¹⁵ (m R¹⁴s are the same or different from each other, and each represent a branched or unbranched alkylene group. R¹⁵ represents a branched or unbranched alkyl group. m represents an integer.))

The bivalent saturated or unsaturated hydrocarbon group which is R¹¹ may be branched or unbranched, and examples of the bivalent saturated or unsaturated hydrocarbon groups include alkylene groups, alkenylene groups, and arylene groups. The number of carbon atoms of the saturated or unsaturated hydrocarbon group is preferably 1 to 10 and more preferably 2 to 6. Specifically, examples of alkylene groups include a methylene group, an ethylene group, a propylene group, a butylene group, a pentylene group, a hexylene group, a heptylene group, an octylene group, a nonylene group, and a decylene group, examples of alkenylene groups include a vinylene group, a 1-propenylene group, and a 2-propenylene group, and examples of arylene groups include a phenylene group, a tolylene group, and a xylylene group.

Regarding R¹² and R¹³, the number of carbon atoms of the branched or unbranched alkyl group is preferably 1 to 15 and more preferably 4 to 10. Specific examples of the branched or unbranched alkyl group include a methyl group, an ethyl group, an n-propyl group, an isopropyl group, an n-butyl group, an iso-butyl group, a sec-butyl group, a tert-butyl group, a pentyl group, a hexyl group, a heptyl group, an octyl group, a nonyl group, a decyl group, and an ethylhexyl group.

Regarding the group represented by -(R¹⁴-O)ₘ-R¹⁵ for R¹² and R¹³, the number of carbon atoms of the branched or unbranched alkylene group which is R¹⁴ is preferably 1 to 3, and the number of carbon atoms of the branched or unbranched alkyl group which is R¹⁵ is preferably 1 to 10 and more preferably 2 to 6. Specific examples of the alkylene group and the alkyl group include the same groups as described above. The integer m is preferably 1 to 10, more preferably 1 to 5, and further preferably 1 to 3.

Among them, at least one of R¹² and R¹³ is preferably the group represented by -(R¹⁴-O)ₘ-R¹⁵, and both R¹² and R¹³ are more preferably the group.

Suitable examples of the aliphatic dibasic acid ester represented by the above formula (1) include bis(alkoxyalkoxyalkyl)adipates (bis(alkyldiglycol)adipates) having the group represented by -(R¹⁴-O)ₘ-R¹⁵, such as bis[2-(2-butoxyethoxy)ethyl]adipate (bis(butyldiglycol)adipate). In addition, other examples thereof include di-n-butyl adipate and diisobutyl adipate. These esters may be used individually, or two or more of these esters may be used in combination.

Examples of softeners including the aliphatic polybasic acid ester include BXA-N (bis[2-(2-butoxyethoxy)ethyl]adipate, freezing point: -19°C, flash point: 207°C, SP value: 8.70, Mw: 435), BXA-R (a mixture of bis[2-(2-butoxyethoxy)ethyl]adipate and diethylene glycol monobutyl ether (about 85 : about 15 (mass ratio)), freezing point: -24°C, flash point: 145°C, SP value: 8.70, Mw: 394), DBA (dibutyl adipate, freezing point: -22°C, flash point: 161°C, SP value: 8.90, Mw: 258), and DIBA (diisobutyl adipate, freezing point: -22°C, flash point: 158°C, Mw: 258), manufactured by Daihachi Chemical Industry Co., Ltd.

From the standpoint of abrasion resistance and dry grip performance in a wide temperature range, the blending ratio of the alkylphenol resin and the aliphatic polybasic acid ester, that is, the alkylphenol resin/the aliphatic polybasic acid ester (mass ratio), is preferably 20/80 to 90/10, more preferably 40/60 to 80/20, and further preferably 60/40 to 75/25.

From the standpoint of performance balance between abrasion resistance and dry grip performance, the rubber composition contains a liquid diene-based polymer. By further containing the liquid diene-based polymer in addition to the alkylphenol resin and the aliphatic polybasic acid ester, performance balance between abrasion resistance and dry grip performance in a wide temperature range is synergistically improved.

The liquid diene-based polymer is a diene-based polymer in liquid form at normal temperature (25°C). From the standpoint of the above performance balance, the weight average molecular weight (Mw) of the liquid diene-based polymer, which is measured by gel permeation chromatography (GPC) and obtained by polystyrene conversion, is preferably 1000 to 200000 and more preferably 3000 to 20000. The liquid diene-based polymer is liquid styrene-butadiene copolymers, since the compatibility with the aliphatic polybasic acid ester is excellent and abrasion resistance and stable grip performance during running are achieved in a balanced manner.

The amount of the liquid styrene-butadiene copolymer, per 100 parts by mass of the rubber component is not less than 10 parts by mass. By setting the mount to be not less than the lower limit, favorable dry grip performance tends to be achieved. The amount is not greater than 50 parts by mass. By setting the amount to be not greater than the upper limit, favorable abrasion resistance is ensured, and performance balance between the abrasion resistance and dry grip performance tends to be favorable.

As a softener, the rubber composition may contain an oil, another resin, or the like in addition to the alkylphenol resin, the aliphatic polybasic acid ester, and the liquid diene-based polymer.

Examples of the oil include process oils, vegetable fats and oils, and mixtures thereof. As the process oil, for example, paraffinic process oil, aromatic process oil, or naphthenic process oil can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. As commercially available products, products of Idemitsu Kosan Co., Ltd., Sankyo Yuka Kogyo K.K., JXTG Nippon Oil & or the like.

The other resin is not particularly limited as long as the other resin is a resin that is generally used in the tire industry. Examples of the other resin include coumarone-indene resins, α-methylstyrene-based resins, terpene-based resins, p-t-butylphenol acetylene resins, and acrylic-based resins. These resins may be used individually, or two or more of these resins may be used in combination.

A coumarone-indene resin is a resin that contains coumarone and indene as monomer components that form the skeleton (main chain) of the resin. Examples of the monomer component contained in the skeleton, other than coumarone and indene, include styrene, α-methylstyrene, methylindene, and vinyltoluene.

Examples of α-methylstyrene-based resins include α-methylstyrene homopolymers and copolymers of α-methylstyrene and styrene.

Examples of terpene-based resins include polyterpenes, terpene phenols, and aromatic modified terpene resins.

Polyterpenes are resins obtained by polymerizing terpene compounds, and hydrogenated products thereof. The above terpene compounds are hydrocarbons represented by a composition of (C₅H₈)ₙ and oxygenated derivatives thereof, and are compounds having, as a basic backbone, a terpene classified into monoterpene (C₁₀H₁₆), sesquiterpene (C₁₅H₂₄), diterpene (C₂₀H₃₂), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol. Examples of polyterpenes include terpene resins formed from the terpene compounds such as α-pinene resin, β-pinene resin, limonene resin, dipentene resin, and β-pinene-limonene resin, and hydrogenated terpene resins obtained by hydrogenating the terpene resins.

Examples of terpene phenols include resins obtained by copolymerization of the above terpene compound and a phenolic compound, and resins obtained by hydrogenating the resins, and specific examples of terpene phenols include resins obtained by condensation of the above terpene compound, a phenolic compound, and formalin. Examples of phenolic compounds include phenol, bisphenol A, cresol, and xylenol.

Examples of aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

Examples of p-t-butylphenol acetylene resins include resins obtained by condensation reaction of p-t-butylphenol and acetylene.

The acrylic-based resins are not particularly limited, but a non-solvent type acrylic-based resin can be suitably used since it can be a resin containing less impurities and having a sharp molecular weight distribution, and the advantageous effects of the present invention can be more favorably achieved.

The non-solvent type acrylic-based resin is a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. 59-6207, Japanese Examined Patent Publication No. 5-58005, Japanese Laid-Open Patent Publication No. 1-313522, US Patent No. 5,010,166, annual search report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present invention, (meth)acrylic means methacrylic and acrylic.

The acrylic-based resin preferably does not substantially contain a polymerization initiator, a chain transfer agent, an organic solvent, etc., which are sub-materials (the purity of the acrylic-based resin (the proportion of resin contained in the resin) is preferably not less than 95% by mass and more preferably not less than 97% by mass). In addition, the acrylic-based resin is preferably a resin that is obtained by continuous polymerization and has a relatively narrow composition distribution and a relatively narrow molecular weight distribution.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives. As the monomer component that forms the acrylic-based resin, an aromatic vinyl such as styrene, α-methylstyrene, vinyltoluene, vinyl naphthalene, divinylbenzene, trivinylbenzene, and divinylnaphthalene may be used together with (meth)acrylic acid or a (meth)acrylic acid derivative.

The acrylic-based resin may be either a resin composed of only a (meth)acrylic component or a resin also containing a component other than a (meth)acrylic component. In addition, the acrylic-based resin may have a hydroxyl group, a carboxyl group, a silanol group, or the like.

As commercially available products of the softeners such as oil and resin, products of Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., FUJI KOSAN COMPANY, LTD., Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., Arakawa Chemical Industries, Ltd., Taoka Chemical Co., Ltd., etc., can be used.

In the rubber composition, the total amount of the softeners such as the alkylphenol resin, the aliphatic polybasic acid ester, the liquid diene-based polymer, the oil, and the other resin, per 100 parts by mass of the rubber component, is preferably not less than 70 parts by mass and more preferably not less than 75 parts by mass. In addition, the upper limit of the total amount is not particularly limited, but the total amount is preferably not greater than 200 parts by mass, more preferably not greater than 150 parts by mass, and further preferably not greater than 125 parts by mass. When the total amount is within the above numerical range, performance balance between abrasion resistance and dry grip performance tends to be favorable. The total amount of the softener is an amount including extending oil of oil-extended rubber.

From the standpoint of the above performance balance, the rubber composition preferably contains besides silica and carbon black a reinforcing filler. Examples of the reinforcing filler include organic fillers and inorganic fillers such as talc, aluminum hydroxide, aluminum oxide, magnesium hydroxide, magnesium oxide, magnesium sulfate, titanium white, titanium black, calcium oxide, calcium hydroxide, aluminium magnesium oxide, clay, pyrophyllite, bentonite, aluminium silicate, magnesium silicate, calcium silicate, aluminum calcium silicate, magnesium silicate, silicon carbide, zirconium, zirconium oxide, and cellulose nanofiber. By using both the alkylphenol resin and the aliphatic polybasic acid ester in combination in the composition containing SBR and carbon black and silica, performance balance between abrasion resistance and dry grip performance in a wide temperature range is synergistically improved.

Examples of carbon black include carbon black produced by the oil furnace method, and two or more types of carbon black having different colloidal characteristics may be used in combination. Specific examples of carbon black include GPF, HAF, ISAF, and SAF. Among them, SAF is suitable. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

The nitrogen adsorption specific surface area (N₂SA) of the carbon black is preferably not less than 100 m²/g, more preferably not less than 105 m²/g, and further preferably not less than 110 m²/g. By setting the N₂SA to be not less than the lower limit, favorable dry grip performance tends to be achieved. The N₂SA is preferably not greater than 600 m²/g, more preferably not greater than 250 m²/g, and further preferably not greater than 180 m²/g. By setting the N₂SA to be not greater than the upper limit, favorable carbon black dispersibility is obtained, and excellent abrasion resistance tends to be achieved.

The N₂SA of the carbon black can be measured according to JIS K 6217-2: 2001.

The dibutyl phthalate absorption amount (DBP) of the carbon black is not less than 50 ml/100 g and preferably not less than 100 ml/100 g. By setting the DBP to be not less than the lower limit, favorable abrasion resistance tends to be achieved. The DBP is not greater than 200 ml/100 g. By setting the DBP to be not greater than the upper limit, favorable dry grip performance tends to be achieved.

In the present specification, the DBP of the carbon black is measured according to JIS K6217-4: 2001.

The amount of the carbon black per 100 parts by mass of the rubber component is preferably not less than 50 parts by mass, more preferably not less than 80 parts by mass, and further preferably not less than 100 parts by mass. By setting the amount to be not less than the lower limit, favorable dry grip performance and abrasion resistance tend to be achieved. The amount is preferably not greater than 250 parts by mass, more preferably not greater than 200 parts by mass, and further preferably not greater than 150 parts by mass. By setting the amount to be not greater than the upper limit, favorable carbon black dispersibility tends to be obtained.

Examples of the silica include dry-process silica (anhydrous silica) and wet-process silica (hydrous silica). Among them, wet-process silica is preferable for the reason that it has a higher silanol group content. As commercially available products, for example, products of Degussa, Rhodia, Tosoh Silica Corporation, Solvay Japan, Ltd., Tokuyama Corporation, etc., can be used.

The amount of the silica per 100 parts by mass of the rubber component is preferably 1 to 100 parts by mass and more preferably 5 to 50 parts by mass.

The nitrogen adsorption specific surface area (N₂SA) of the silica is not less than 40 m²/g, preferably not less than 50 m²/g, more preferably not less than 100 m²/g, further preferably not less than 130 m²/g, and particular preferably not less than 160 m²/g. By setting the N₂SA to be not less than the lower limit, favorable breaking strength and the like tend to be obtained. The N₂SA is not greater than 500 m²/g, preferably not greater than 300 m²/g, more preferably not greater than 250 m²/g, and further preferably not greater than 200 m²/g.

The N₂SA of the silica is a value measured by the BET method according to ASTM D3037-93.

The rubber composition contains a silane coupling agent. Examples of the silane coupling agent include any silane coupling agents that are conventionally used in combination with silica in the rubber industry. Specific examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used.

The amount of the silane coupling agent per 100 parts by mass of the silica is preferably not less than 3 parts by mass and more preferably not less than 5 parts by mass. The amount is preferably not greater than 20 parts by mass and more preferably not greater than 15 parts by mass.

The rubber composition preferably contains stearic acid. From the standpoint of the above performance balance, the amount of stearic acid per 100 parts by mass of the rubber component is preferably 0.5 to 10 parts by mass and more preferably 0.5 to 5 parts by mass.

As stearic acid, a conventionally known one can be used, and, for example, products of NOF Corporation, Kao Corporation, Wako Pure Chemical Industries, Ltd., New Japan Chemical Co., Ltd., etc., can be used.

The rubber composition preferably contains zinc oxide. The amount of zinc oxide per 100 parts by mass of the rubber component is preferably 0.5 to 10 parts by mass and more preferably 1 to 5 parts by mass. By adjusting the amount within the above range, the above effects are favorably achieved.

The type of zinc oxide is not particularly limited. Zinc oxide that is generally used in the field of rubbers such as tire can be used, and in addition to normal zinc oxide, fine particle zinc oxide can also be suitably used. Examples of fine particle zinc oxide include zinc oxide having an average primary particle diameter of not greater than 200 nm. The average primary particle diameter of zinc oxide is preferably not greater than 100 nm, and the lower limit thereof is not particularly limited, but the average primary particle diameter of zinc oxide is preferably not less than 20 nm and more preferably not less than 30 nm. The average primary particle diameter of zinc oxide represents an average particle diameter (average primary particle diameter) obtained by conversion from a specific surface area measured by the BET method on the basis of nitrogen adsorption.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

From the standpoint of crack resistance, ozone resistance, etc., the rubber composition preferably contains an antioxidant. The amount of the antioxidant per 100 parts by mass of the rubber component is preferably 0.5 to 7.0 parts by mass and more preferably 1.5 to 4.0 parts by mass.

The antioxidant is not particularly limited, but examples of the antioxidant include: naphthylamine antioxidants such as phenyl-α-naphthylamine; diphenylamine antioxidants such as octylated diphenylamine and 4,4'-bis(a,a'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. Among them, the p-phenylenediamine antioxidants and the quinoline-based antioxidants are preferable, and N-(1,3-dimethylbutyl)-N'-phenyl-p-phenylenediamine, and a polymer of 2,2,4-trimethyl-1,2-dihydroquinoline are more preferable. As commercially available products, for example, products of Seiko Chemical Co., Ltd., Sumitomo Chemical Co., Ltd., Ouchi Shinko Chemical Industrial Co., Ltd., Flexsys, etc., can be used.

From the standpoint of crack resistance, ozone resistance, etc., the rubber composition may contain wax.

The type of wax is not particularly limited, and examples of the wax include petroleum wax and natural wax. In addition, synthetic wax obtained by refining or chemically treating a plurality of waxes can be used. These waxes may be used individually, or two or more of these waxes may be used in combination.

Examples of the petroleum wax include paraffin wax and microcrystalline wax. The natural wax is not particularly limited as long as it is wax derived from a material other than petroleum. Examples of the natural wax include: vegetable waxes such as candelilla wax, carnauba wax, Japan wax, rice wax, and jojoba wax; animal waxes such as beeswax, lanolin, and whale wax; mineral waxes such as ozokerite, ceresin, and petrolatum; and refined products thereof. As commercially available products, for example, products of Ouchi Shinko Chemical Industrial Co., Ltd., NIPPON SEIRO CO., LTD., Seiko Chemical Co., Ltd., etc. can be used.

In the case where wax is contained, the amount of the wax per 100 parts by mass of the rubber component is preferably 0.3 to 6.0 parts by mass.

The rubber composition preferably contains sulfur from the standpoint of forming favorable crosslinked chains in the polymer chain and imparting excellent dry grip performance and abrasion resistance.

The amount of sulfur per 100 parts by mass of the rubber component is preferably not less than 0.1 parts by mass, more preferably not less than 0.5 parts by mass, and further preferably not less than 0.8 parts by mass. The amount is preferably not greater than 6.0 parts by mass, more preferably not greater than 4.0 parts by mass, and further preferably not greater than 3.0 parts by mass. By setting the amount within the above range, the advantageous effects of the present invention tend to be sufficiently achieved.

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

The rubber composition preferably contains a vulcanization accelerator. The amount of the vulcanization accelerator per 100 parts by mass of the rubber component is preferably not less than 1 part by mass and more preferably not less than 3 parts by mass, and is preferably not greater than 15 parts by mass and more preferably not greater than 10 parts by mass. By setting the amount to be not less than the lower limit, a sufficient vulcanization rate is achieved, and favorable grip performance and abrasion resistance tend to be achieved. By setting the amount to be not greater than the upper limit, blooming is inhibited, and decline in grip performance and abrasion resistance tends to be able to be prevented.

The type of the vulcanization accelerator is not particularly limited, and vulcanization accelerators that are normally used can be used. Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, from the standpoint of the above performance balance, sulfenamide-based vulcanization accelerators and guanidine-based vulcanization accelerators are preferable.

In addition to the above components, the rubber composition may contain ingredients that are generally used in the tire industry, for example, materials such as a mold lubricant, as appropriate.

As a method for producing the rubber composition, a known method can be used. For example, the rubber composition can be produced by a method in which the above respective components are kneaded using a rubber kneading device such as an open roll and a Banbury mixer and then vulcanization is performed.

As for the kneading conditions, in a base kneading step of kneading the additives other than a vulcanizing agent and the vulcanization accelerator, the kneading temperature is normally 50 to 200°C and preferably 80 to 190°C, and the kneading time is normally 30 seconds to 30 minutes and preferably 1 minute to 30 minutes. In a finish kneading step of kneading the vulcanizing agent and the vulcanization accelerator, the kneading temperature is normally not higher than 100°C and preferably room temperature to 80°C. In addition, a composition obtained by kneading the vulcanizing agent and the vulcanization accelerator is normally subjected to vulcanization processing such as press vulcanization. The vulcanization temperature is normally 120 to 200°C and preferably 140 to 180°C.

### (Pneumatic Tire)

The pneumatic tire of the present invention can be produced by a normal method using the above rubber composition.

Specifically, an unvulcanized tire can be formed by extruding a rubber composition obtained by blending the above components, in an unvulcanized state so as to correspond to the shape of a tread, and forming the extruded rubber composition together with other tire members on a tire forming machine by a general method. A tire is obtained by heating and pressurizing the unvulcanized tire in a vulcanizing machine.

The pneumatic tire of the present invention can be used as, for example, a tire for a passenger car, a tire for a truck or a bus, a tire for a two-wheeled automotive vehicle, and a high performance tire (tire for racing).

### EXAMPLES

The present invention will be specifically described by means of examples, but the present invention is not limited to these examples.

Various chemicals used in examples and comparative examples are collectively described below
SBR: Tufdene 4850 (styrene content: 40% by mass, vinyl content of a butadiene component: 41% by mass, containing 50 parts by mass of oil per 100 parts by mass of rubber solid contents) manufactured by Asahi Kasei Corporation
NR: TSR
BR: BR 150B (cis content: 97% by mass) manufactured by Ube Industries, Ltd.
Carbon black: Seast 9 (SAF, N₂SA: 142 m²/g, DBP absorption amount: 115 ml/100 g) manufactured by Tokai Carbon Co., Ltd.
Silica: ULTRASIL VN3 (N₂SA: 175 m²/g) manufactured by Evonik Degussa GmbH
Silane coupling agent: Si75 (bis(3-triethoxysilylpropyl)disulfide) manufactured by Evonik Degussa GmbH
Alkylphenol resin 1: Koresin (p-t-butylphenol acetylene resin (condensation resin of p-t-butylphenol and acetylene), softening point: 145°C, Tg: 98°C) manufactured by BASF
Fatty acid dibasic acid ester 1: BXA-N (bis(butyldiglycol)adipate (bis[2-(2-butoxyethoxy)ethyl]adipate), SP value: 8.70, freezing point: -19°C, flash point: 207°C, Mw: 435) manufactured by Daihachi Chemical Industry Co., Ltd.
Fatty acid dibasic acid ester 2: DOS (bis(2-ethylhexyl)sebacate, SP value: 8.5, freezing point: -62°C, flash point: 222°C, Mw: 427) manufactured by Daihachi Chemical Industry Co., Ltd.
Tri(2-ethylhexyl)phosphate: TOP (SP value: 8.2) manufactured by Daihachi Chemical Industry Co., Ltd.
Liquid styrene-butadiene copolymer: Mw 10000
Process oil: Diana Process AH-24 manufactured by Idemitsu Kosan Co., Ltd.
Zinc oxide: two types of zine oxide manufactured by Mitsui Mining & Smelting Co., Ltd.
Stearic acid: Tsubaki manufactured by NOF Corporation
Antioxidant: ANTIGENE 6C manufactured by Sumitomo Chemical Co., Ltd.
Sulfur: powdery sulfur (manufactured by Karuizawa Sulfur Co, Ltd.)
Vulcanization accelerator DM: Nocceler DM (di-2-benzothiazolyl disulfide) manufactured by Ouchi Shinko Chemical Industrial Co., Ltd.
Vulcanization accelerator TOT-N: Nocceler TOT-N (tetrakis (2-ethylhexyl)thiuram disulfide) manufactured by Ouchi Shinko Chemical Industrial Co., Ltd.

### [Examples and Comparative Examples]

### <Production of Test Tires>

In accordance with each of the blending formulas shown in Tables 1 and 2, the materials other than the sulfur and the vulcanization accelerator were kneaded using a Banbury mixer to obtain a kneaded product. Then, the sulfur and the vulcanization accelerator were added to the obtained kneaded product, and the mixture was kneaded using an open roll to obtain an unvulcanized rubber composition. The obtained unvulcanized rubber composition was formed into the shape of a tread and attached together with other tire members on a tire forming machine, and press vulcanization was performed at 150°C for 30 minutes to obtain a test tire (tire size: 215/45R17).

### <Evaluation Methods>

The produced test tires were evaluated as described below, and the results are shown in Tables 1 and 2 (reference in Table 1: Comparative Example 1-1, reference in Table 2: Comparative Example 2-1).

### <Low-Temperature Dry Grip Performance>

The test tires were mounted to all the wheels of an FR car (an engine displacement of 2000 cc) produced in Japan, and the car was actually caused to run 10 laps on a 3-km test course having a dry asphalt road surface when the air temperature was approximately 10°C. The test driver evaluated control at the fastest lap in running, and the evaluation results are indicated as indexes with the results of the reference comparative examples being 100. A higher value indicates that the low-temperature dry grip performance is higher.

### <High-Temperature Dry Grip Performance>

The test tires were mounted to all the wheels of an FR car (an engine displacement of 2000 cc) produced in Japan, and the car was actually caused to run 10 laps on a 3-km test course having a dry asphalt road surface when the air temperature was approximately 30°C. The test driver evaluated control at the fastest lap in running, and the evaluation results are indicated as indexes with the results of the reference comparative examples being 100. A higher value indicates that the high-temperature dry grip performance is higher.

### <Abrasion resistance>

The groove depth (15 mm in the case of a new tire) of a tire tread rubber after the test for high-temperature dry grip performance was measured, and the average of the groove depths of 8 tires was obtained. The results are indicated as indexes with the groove depth of the reference comparative examples being 100. A higher value indicates that the abrasion resistance is higher.

**[Table 1]**

| | | Example | | | Comparative Example | | | | | | | | |
|---|---|---|---|---|---|---|---|---|---|---|---|---|---|
| | | 1-1* | 1-2* | 1-3* | 1-1 | 1-2 | 1-3 | 1-4 | 1-5 | 1-6 | 1-7 | 1-8 | 1-9 |
| Composition (part(s) by mass) | SBR | 150 | 150 | 150 | 150 | 150 | 150 | 150 | 150 | 150 | 150 | 150 | 150 |
| | Carbon black | 120 | 120 | 120 | 120 | 120 | 120 | 120 | 120 | 120 | 120 | 120 | 120 |
| | Alkylphenol resin 1 (p-t-butylphenol acetylene resin) | 20 | 30 | 20 | | | | | | 7 | 25 | 20 | |
| | Fatty acid dibasic acid ester 1 (bis(butyldiglycol)adipate) | 10 | 15 | | | | 5 | 15 | | | | | 10 |
| | Fatty acid dibasic acid ester 2 (bis(2-ethylhexyl)sebacate) | | | 10 | | | | | | | | | |
| | Tri(2-ethylhexyl)phosphate | | | | | | | | 5 | | | | |
| | Liquid styrene-butadiene copolymer | 25 | 10 | 25 | 55 | | 50 | 40 | 50 | 48 | 30 | 35 | 45 |
| | Process oil | | | | | 55 | | | | | | | |
| | Zinc oxide | 4 | 4 | 4 | 4 | 4 | 4 | 4 | 4 | 4 | 4 | 4 | 4 |
| | Stearic acid | 1 | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 | 2 |
| | Sulfur | 1.2 | 1.2 | 1.2 | 1.2 | 1.2 | 1.2 | 1.2 | 1.2 | 1.2 | 1.2 | 1.2 | 1.2 |
| | Vulcanization accelerator DM | 4 | 4 | 4 | 4 | 4 | 4 | 4 | 4 | 4 | 4 | 4 | 4 |
| | Vulcanization accelerator TOT-N | 2 | 2 | 2 | 2 | 2 | 2 | 2 | 2 | 2 | 2 | 2 | 2 |
| Evaluation | Low-temperature dry grip performance | 105 | 103 | 105 | 100 | 107 | 105 | 113 | 103 | 98 | 78 | 91 | 100 |
| | High-temperature dry grip performance | 110 | 120 | 108 | 100 | 90 | 95 | 87 | 95 | 104 | 115 | 106 | 90 |
| | Abrasion resistance | 100 | 100 | 100 | 100 | 97 | 100 | 100 | 99 | 99 | 95 | 100 | 100 |

| | | | | | | | | | | | | | |
|---|---|---|---|---|---|---|---|---|---|---|---|---|---|
| *Reference Example | | | | | | | | | | | | | |

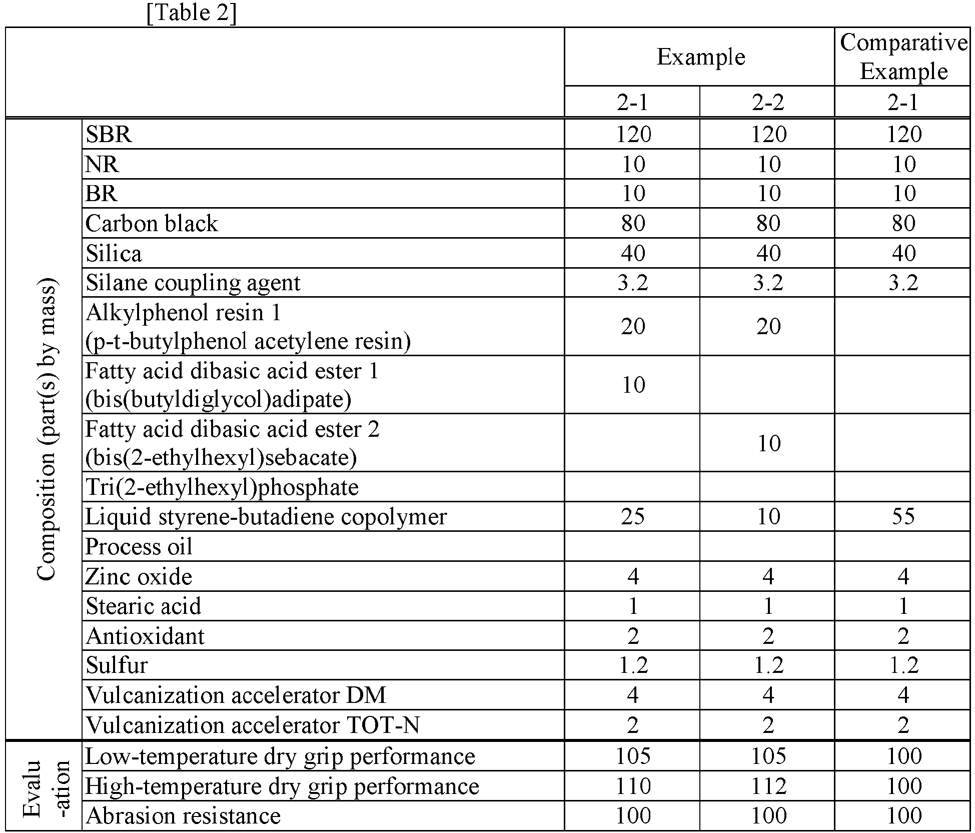

In the rubber composition of each Example for which an alkylphenol resin and an aliphatic polybasic acid ester having a predetermined SP value are used in combination in the composition containing SBR and carbon black, while favorable abrasion resistance was maintained, excellent low-temperature dry grip performance and high-temperature dry grip performance were achieved, and favorable dry grip performance was achieved in a wide temperature range. In addition, the results of Example 1-1 and Comparative Examples 1-1, 1-8, and 1-9 demonstrate that performance balance among low-temperature dry grip performance, high-temperature dry grip performance, and abrasion resistance is improved by the above combined use.

Provided is a pneumatic tire that achieves excellent dry grip performance in a wide temperature range. The pneumatic tire includes a tread for which a rubber composition as defined in any one of claims 1 to 5 is used.

## Claims

1. A pneumatic tire comprising a tread for which a rubber composition containing: a rubber component containing styrene-butadiene rubber; an alkylphenol resin; an aliphatic polybasic acid ester having a SP value of 8.40 to 9.50, 10 to 50 parts by mass of a liquid styrene-butadiene copolymer per 100 parts by mass of the rubber component, carbon black having a dibutylphthalate absorption amount (DBP) of not less than 50 ml/100 g and not greater than 200 ml/100 g, silica having a nitrogen specific surface area (N₂SA) of not less than 40 m²/g and not greater than 500 m²/g and a silane coupling agent; the DBP of the carbon black being measured according to JIS K6217-4:2001, and the N₂SA of the silica being measured by the BET method according to ASTM D3037-93.

2. The pneumatic tire according to claim 1, wherein an amount of the alkylphenol resin per 100 parts by mass of the rubber component is 10 to 50 parts by mass, and an amount of the aliphatic polybasic acid ester per 100 parts by mass of the rubber component is 5 to 55 parts by mass.

3. The pneumatic tire according to claim 1 or 2, wherein the aliphatic polybasic acid ester is bis(butyldiglycol)adipate.

4. The pneumatic tire according to any one of claims 1 to 3, wherein the amount of silane coupling agent per 100 parts by mass of the silica is not less than 3 parts by mass and not greater than 20 parts by mass.

5. The pneumatic tire according to any one of claims 1 to 4, wherein the blending ratio of alkylphenol resin and aliphatic polybasic acid ester (mass ratio) is 60/40 to 75/25.

## Patentansprüche

1. Luftreifen, umfassend eine Lauffläche, für die eine Kautschukzusammensetzung, enthaltend: eine Kautschukkomponente, die Styrol-Butadien-Kautschuk enthält; ein Alkylphenolharz; einen aliphatischen Ester einer mehrwertigen Säure mit einem SP-Wert von 8,40 bis 9,50, 10 bis 50 Masseteile eines flüssigen Styrol-Butadien-Copolymers pro 100 Masseteile der Kautschukkomponente, Kohleschwarz mit einer Dibutylphthalat-Absorptionsmenge (DBP) von nicht weniger als 50 ml/100 g und nicht mehr als 200 ml/100 g, Siliciumoxid mit einer Stickstoffspezifischen Oberfläche (N₂SA) von nicht weniger als 40 m²/g und nicht mehr als 500 m²/g und ein Silan-Kupplungsmittel; wobei die DBP des Kohleschwarz gemäß JIS K6217-4.2001 gemessen ist und die N₂SA des Siliciumoxids gemäß ASTM D3037-93 gemessen ist.

2. Luftreifen nach Anspruch 1, wobei eine Menge des Alkylphenolharzes pro 100 Masseteile der Kautschukkomponente 10 bis 50 Masseteile beträgt und eine Menge des aliphatischen Esters einer mehrwertigen Säure pro 100 Masseteile der Kautschukkomponente 5 bis 55 Masseteile beträgt.

3. Luftreifen nach Anspruch 1 oder 2, wobei der aliphatische Ester einer mehrwertigen Säure Bis(butyldiglycol)adipat ist.

4. Luftreifen nach einem der Ansprüche 1 bis 3, wobei die Menge des Silan-Kupplungsmittels pro 100 Masseteile des Siliciumoxids nicht weniger als 3 Masseteile und nicht mehr als 20 Masseteile beträgt.

5. Luftreifen nach einem der Ansprüche 1 bis 4, wobei das Mischungsverhältnis von Alkylphenolharz und aliphatischem Ester einer mehrwertigen Säure (Massenverhältnis) 60/40 bis 75/25 beträgt.

## Revendications

1. Pneumatique comprenant une bande de roulement pour laquelle une composition de caoutchouc contenant : un composant de type caoutchouc contenant un caoutchouc de styrène-butadiène ; une résine d'alkylphénol ; un ester d'acide polybasique aliphatique ayant une valeur SP de 8,40 à 9,50, 10 à 50 parties en masse d'un copolymère liquide de styrène-butadiène par 100 parties en masse du composant de type caoutchouc, du noir de carbone ayant une quantité d'absorption de phtalates de dibutyle (DBP) non inférieure à 50 ml/100 g et non supérieure à 200 ml/100 g, une silice ayant une superficie spécifique d'azote (N₂SA) non inférieure à 40 m²/g et non supérieure à 500 m²/g et un agent de couplage de type silane ; la DBP du noir de carbone étant mesurée selon la norme JIS K6217-4:2001, et la N₂SA de la silice étant mesurée par le procédé BET selon la norme ASTM D3037-93.

2. Pneumatique selon la revendication 1, une quantité de la résine d'alkylphénol par 100 parties en masse du composant de type caoutchouc étant de 10 à 50 parties en masse, et une quantité de l'ester d'acide polybasique aliphatique par 100 parties en masse du composant de type caoutchouc étant de 5 à 55 parties en masse.

3. Pneumatique selon la revendication 1 ou 2, l'ester d'acide polybasique aliphatique étant l'adipate de bis(butyldiglycol).

4. Pneumatique selon l'une quelconque des revendications 1 à 3, la quantité d'agent de couplage de type silane par 100 parties en masse de la silice n'étant pas inférieure à 3 parties en masse et pas supérieure à 20 parties en masse.

5. Pneumatique selon l'une quelconque des revendications 1 à 4, le rapport de mélange de résine d'alkylphénol et d'ester d'acide polybasique aliphatique (rapport en masse) étant de 60/40 à 75/25.
